# EUROPÄISCHE PATENTSCHRIFT

(11) **EP 1 253 349 B1**
(45) Veröffentlichungstag und Bekanntmachung des Hinweises auf die Patenterteilung: **20.04.2005**
(21) Anmeldenummer: 02002602.7
(22) Anmeldetag: 05.02.2002
(51) Int. Cl.: F16H 35/10, F16H 57/02, F16D 43/202

(54) **Zahnradgetriebe mit integrierter Überlastkupplung**
Gear transmission with integrated overload coupling
Transmission à engrenage avec accouplement de surcharge intégré

(30) Priorität: 27.04.2001 DE 10120758
(43) Veröffentlichungstag der Anmeldung: 30.10.2002
(73) Patentinhaber: GKN Walterscheid Getriebe GmbH, 02681 Kirschau (DE)
(72) Erfinder: Rauschenbach, Stefan, 02692 Grosspostwitz (DE); Roth, Andreas, 02681 Schirgiswalde (DE); Jacob, Johannes, 02692 Obergurig (DE); Müller, Silke, 02694 Grossdubrau (DE)
(74) Vertreter: Harwardt, Günther, Dipl.-Ing.

(56) Entgegenhaltungen:
- WO-A-01/32354
- US-A- 3 653 226
- US-A- 4 231 443
- US-A- 4 828 095
- US-A- 5 299 666

## Beschreibung

Die Erfindung betrifft ein Zahnradgetriebe mit Überlastkupplung zum Schutz von Antriebssträngen an Maschinen, insbesondere von landwirtschaftlichen Maschinen oder Geräten.

Es ist bekannt, eine Überlastkupplung an einer Eingangswelle zu einem Zahnradgetriebe vorzusehen. Hierzu dient eine Keilzahnverbindung zwischen der Eingangswelle des Zahnradgetriebes und der Überlastkupplung.

Die Drehmomentbegrenzungskupplung gemäß der DE 41 37 829 C2 weist ein Außenteil und ein Innenteil auf, wobei das Innenteil eine axial verlaufende Aufsteckbohrung mit einer Keilverzahnung aufweist. Die Kupplung kann auf eine entsprechende Keilverzahnung einer Eingangswelle eines Getriebes aufgesteckt werden.

Die Drehmomentbegrenzungskupplung gemäß der DE 32 05 513 C1 weist ebenfalls ein Außenteil und ein Innenteil auf, wobei das Innenteil in einen Nabenabschnitt übergeht, der eine Sacklochbohrung mit einer Keilverzahnung aufweist. Das Innenteil kann somit auf eine Eingangswelle eines Getriebes mit einer entsprechenden Keilverzahnung aufgesteckt werden.

Die Außenteile beider Kupplungen lassen sich mit einer weiteren Welle verbinden oder gehen in eine Gelenkgabel eines Kreuzgelenkes über. Nachteilig bei diesen Ausführungsformen ist, daß die Eingangswelle des Zahnradgetriebes im Bereich der Überlastkupplung frei auskragt und daher nur im begrenzten Maße Biegemomente und Querkräfte aufnehmen kann. Zudem ist die Überlastkupplung äußeren Einflüssen ausgesetzt und unterliegt somit einem höheren Verschleiß. Dies wirkt sich ungünstig auf das Ansprechmoment und auf die Lebensdauer der Überlastkupplung aus.

Die US 5 299 666 zeigt ein Zahnradgetriebe mit einem Getriebegehäuse, in dem eine Antriebswelle, eine Anschlusswelle sowie eine Drehmomentbegrenzungskupplung um eine Drehachse drehbar angeordnet sind. Auf einer axialen Seite der Drehmomentbegrenzungskupplung sind sowohl die Antriebswelle als auch die Anschlusswelle vorgesehen, wobei die Anschlusswelle als Hohlwelle gestaltet ist und drehbar um die Antriebswelle angeordnet ist. Hierbei ist die Anschlusswelle auf der Antriebswelle gleitgelagert und in dem Getriebegehäuse mittels Wälzlager gelagert. Die Anschlusswelle ist mit einem zur Drehmomentbegrenzungskupplung weisenden Wellenende mit einem ersten Kupplungselement der Drehrnomentbegrenzungskupplung verbunden. Die Drehmomentbegrenzungskupplung ist ferner um die Antriebswelle angeordnet, wobei ein zweites Kupplungselement der Drehmomentbegrenzungskupplung drehfest mit der Antriebswelle verbunden ist. Die Antriebswelle ist femer auf einer von der Anschlusswelle abgewandten Seite der Drehmomentbegrenzungskupplung mittels eines Wälzlagers im Getriebegehäuse gelagert. Dadurch, dass die Antriebswelle in dem Getriebegehäuse gelagert ist und die Anschlusswelle um die Antriebswelle angeordnet und auf dieser gelagert ist, treten keine auskragenden Wellenenden auf, so dass Querkräfte gut aufgenommen werden können.

Aufgabe der vorliegenden Erfindung ist es, eine Anordnung zwischen Zahnradgetriebe und Drehmomentbegrenzungskupplung bereitzustellen, bei der die Wellen, die mit der Drehmomentbegrenzungskupplung verbunden sind, Biegemomente und Querkräfte besser aufnehmen können und die Drehmomentbegrenzungskupplung vor äußeren Einflüssen geschützt ist.

Die Aufgabe wird erfindungsgemäß durch ein Zahnradgetriebe
- mit einem Getriebegehäuse,
- mit einer Antriebswelle,
- die durch eine Bohrung (10) aus dem Getriebegehäuse (1, 2) austritt, und
- die im Getriebegehäuse (1, 2) um eine Drehachse (X-X) drehbar gelagert ist,
- mit einer Anschlußwelle,
- die innerhalb des Getriebegehäuses angeordnet ist,
- die um die Drehachse drehbar gelagert ist und
- die mit einem Zahnrad einer Getriebestufe drehfest verbunden ist,
- mit einer Drehmomentbegrenzungskupplung, die innerhalb des Getriebegehäuses angeordnet ist und die antriebsseitig mit einem Wel-lenende der der Antriebswelle und abtriebsseitig mit einem Wellenende der Anschlußwelle verbunden ist,
- wobei die Antriebswelle und die Anschtußwette axial hintereinander angeordnet sind und an ihren Wellenenden mittels eines Radiallagers gegeneinander gelagert sind,
gelöst.

Dadurch, daß die Drehmomentbegrenzungskupplung innerhalb des Getriebegehäuses angeordnet ist, ist zum einen gewährleistet, daß die Drehmomentbegrenzungskupplung von äußeren Einflüssen geschützt ist. Zudem befindet sich die Drehmomentbegrenzungskupplung innerhalb des Schmierverbands des Zahnradgetriebes und muß daher nicht separat geschmiert werden.

Ferner kann die Anschlußwelle Biegemomente und Querkräfte aufnehmen, da die Anschlußwelle einerseits im Getriebegehäuse gelagert ist und andererseits direkt gegenüber der Antriebswelle gelagert ist. Die Anschlußwelle ist somit nicht auskragend angeordnet.

Um die Antriebswelle und die Anschlußwelle gegeneinander zu lagern, ist ein Zapfen an der Anschlußwelle vorgesehen, der in einer axial verlaufenden Lagerbohrung der Antriebswelle gelagert ist. Vorzugsweise ist hierfür ein Radiallager in Form eines Nadellagers vorzusehen.

Um eine möglichst weite Abstützung der Antriebswelle zu gewährleisten, ist die Antriebswelle mittels zweier Kegelrollenlager im Getriebegehäuse gelagert, wobei sich die Wirkungslinien der Abstützung der Wälzkörper jeweils eines Kegelrollenlagers in einem Abstützpunkt schneiden und die beiden Kegelrollenlager zwischen den Abstützpunkten angeordnet sind. Die Kegelrollenlager sind in der sogenannten O-Anordnung zueinander angeordnet, welche eine möglichst weite Abstützung einer Welle gewährleistet. Die Wirkungslinien verlaufen jeweils rechtwinklig zur Längsachse der Kegelrollen und schneiden die Längsachse der zu lagernden Welle. Der Schnittpunkt der Wirkungslinien aller Kegelrollen eines Kegelrollenlagers mit der Längsachse der Rolle definiert den Abstützpunkt des Kegelrollenlagers. Im vorliegenden Fall ist der Abstützpunkt eines Kegelrollenlagers jeweils vom benachbarten Kegelrollenlager abgewandt. Somit ergibt sich ein großer Abstand zwischen den Abstützpunkten beider Kegelrollenlager.

Das Radiallager ist vorzugsweise im Bereich der Wirkungslinien desjenigen Wälzlagers der Antriebswelle angeordnet, daß am nächsten zur Drehmomentbegrenzungskupplung angeordnet ist. Das Radiallager ist somit im Bereich des Abstützpunktes eines Kegelrollenlagers angeordnet. Querkräfte und Biegemomente können somit von der Anschlußwelle über das Radiallager auf die Kegelrollenlager übertragen werden.

Damit das Getriebe nicht vollständig demontiert werden muß, wenn Arbeiten an der Drehmomentbegrenzungskupplung erforderlich sind, kann vorgesehen sein, daß das Getriebegehäuse einen Gehäusegrundkörper, der einen ersten Innenraum bildet, und einen Gehäusedeckel, der lösbar mit dem Gehäusegrundkörper verbunden ist und einen zweiten Innenraum bildet, umfaßt, daß die Bohrung, durch die die Antriebswelle aus dem Getriebegehäuse austritt, in dem Gehäusedeckel vorgesehen ist und daß die Antriebswelle in der Bohrung im Gehäusedeckel gelagert ist.

Vorzugsweise ist vorgesehen, daß zwischen den beiden Kegelrollenlagern eine Dichtung angeordnet ist, durch die der zweite Innenraum gegenüber dem ersten Innenraum abgedichtet ist, und daß auf derjenigen Seite der Antriebswelle, die der Drehmomentbegrenzungskupplung abgewandt ist, ein Wellendichtring vorgesehen ist, mittels dem der zweite Innenraum nach außen hin abgedichtet ist. Somit ist für die Lagerung der Anschlußwelle im Gehäusedeckel ein separater Innenraum vorgesehen.

Um eine verbesserte Schmierung des Radiallagers zu gewährleisten ist eine Verbindungsbohrung vorgesehen,
- die den ersten Innenraum und den zweiten Innenraum miteinander verbindet, wobei die Verbindungsbohrung in einer Wand des Gehäusedeckels vorgesehen ist,
- die vom ersten Innenraum ausgeht und
- die in einem Bereich zwischen den beiden Kegelrollenlagern in den zweiten Innenraum mündet,
wobei die Antriebswelle zwischen dem Wellendichtring und demjenigen Kegelrollenlager, das am nächsten zum Wellendichtring angeordnet ist, ausgehend von einer Außenumfangsfläche der Antriebswelle eine Radialbohrung aufweist, und
wobei die Radialbohrung in eine Axialbohrung übergeht, die in eine Grundfläche der Lagerbohrung der Antriebswelle mündet.

Kegelrollenlager haben einen Kreiselpumpeneffekt, durch den Schmieröl von einer Seite des Kegelrollenlagers axial zur anderen Seite des Kegelrollenlagers, und zwar zum Abstützpunkt hin, gepumpt wird. Dieser Effekt tritt aufgrund des in Richtung auf den Abstützpunkt hin zunehmenden Innendurchmessers des Außenrings auf, wodurch das Schmieröl auf höhere Umfangsgeschwindigkeiten beschleunigt wird und durch Fliehkräfte gegen die Innenfläche des Außenrings gedrückt wird, wodurch das Öl axial zu Bereichen der Innenfläche mit größerem Innendurchmesser fließt. Dieser Effekt wird dahingehend genutzt, daß Schmieröl aus dem ersten Innenraum durch die Verbindungsbohrung in den zweiten Innenraum gelangen kann, wobei das Öl in den Bereich zwischen den beiden Kegelrollenlagern hineinfließt. In Richtung zum ersten Innenraum ist der zweite Innenraum abgedichtet, so daß dasjenige Kegelrollenlager, das der Drehmomentbegrenzungskupplung am nächsten angeordnet ist, kein Öl in den ersten Innenraum zurückpumpen kann. Das Öl zwischen den beiden Kegelrollenlagern wird von demjenigen Kegelrollenlager, das der Drehmomentbegrenzungskupplung entfernt angeordnet ist, in Richtung zum Wellendichtring gepumpt. Auf der Seite des Kegelrollenlagers, die der Drehmomentbegrenzungskupplung abgewandt ist, kann das Öl weiter durch die Radialbohrung und durch die Axialbohrung in die Lagerbohrung fließen. Dort dient es zur Schmierung des Radiallagers.

Vorzugsweise ist die Drehmomentbegrenzungskupplung durch eine Sperrkörperkupplung dargestellt. Hierbei kann es sich z.B. um eine Sperrkörperkupplung gemäß der DE 32 05 513 C1 oder um eine Sperrkörperkupplung gemäß der DE 41 37 829 C2 handeln.

Die Sperrkörperkupplung weist ein Außenteil und ein Innenteil auf, wobei das Außenteil eine Baueinheit mit der Antriebswelle und das Innenteil eine Baueinheit mit der Anschlußwelle bildet. Das Außenteil ist vorzugsweise mit der Antriebswelle verschweißt.

Das Innenteil kann einteilig mit der Anschlußwelle ausgebildet sein.

Alternativ kann vorgesehen sein, daß die Anschlußwelle eine Keilverzahnung aufweist und daß das Innenteil eine axiale Durchgangsbohrung mit einer komplementären Keilverzahnung aufweist, mit der das Innenteil auf die Keilverzahnung der Anschlußwelle aufgesteckt ist.

Zur besseren Schmierung der Sperrkörperkupplung ist vorgesehen, dass die Anschlusswelle ausgehend von einer Stirnfläche eine Bohrung aufweist, die zur Schmierung zu den Sperrkörpern führt. Durch die Bohrung in der Anschlusswelle wird die Sperrkörperkupplung von innen heraus zur Vermeidung von erhöhtem Verschleiß gezielt geschmiert. Desweiteren werden ein gleichmäßiges und konstantes Reibverhalten der Sperrkörperkupplung und eine Minimierung der Streubreite des Ansprechmomentes der Kupplung über die Lebensdauer erreicht.

Die Anschlusswelle ist vorzugsweise mittels eines Wälzlagers im Getriebegehäuse gelagert, wobei das Wälzlager durch ein Pendelrollenlager gebildet sein kann.

Bevorzugte Ausführungsform werden im folgenden anhand der Zeichnungen näher erläutert.

Hierin zeigt
- Figur 1: ein Zahnradgetriebe mit integrierter Überlastkupplung, wobei ein Innenteil der Überlastkupplung einstückig mit einer Anschlusswelle ausgebildet ist und
- Figur 2: ein Zahnradgetriebe mit integrierter Überlastkupplung, wobei ein Innenteil der Überlastkupplung eine Bohrung aufweist, mit der es auf eine Anschlusswelle aufgesteckt ist.

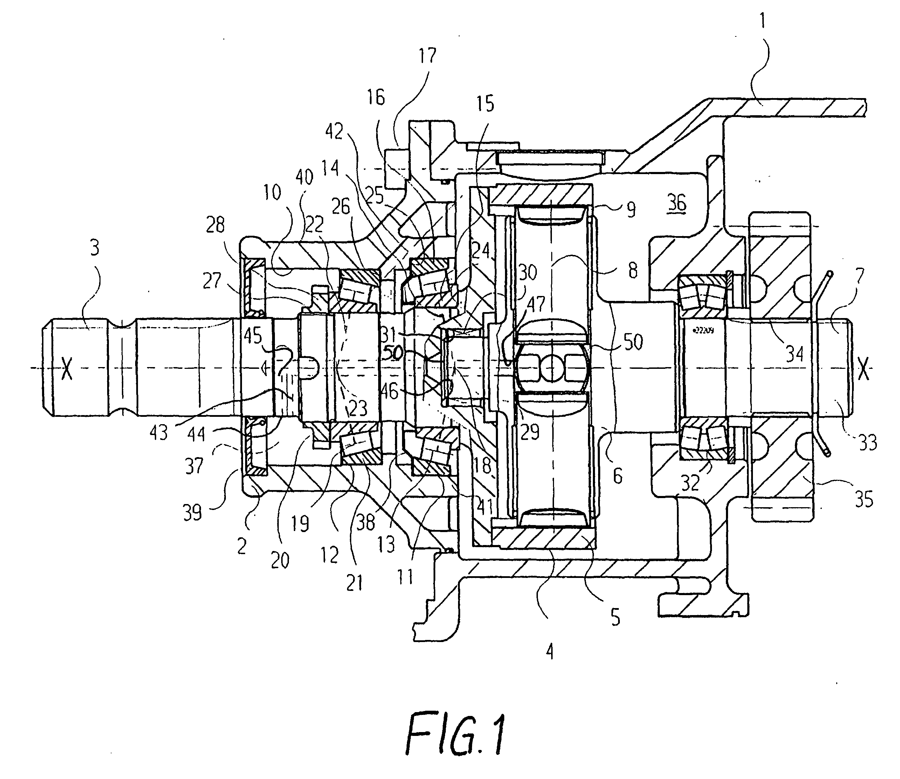

Figur 1 zeigt ein Zahnradgetriebe mit einem Getriebegrundkörper 1 und einem Getriebedeckel 2, die zusammen ein Getriebegehäuse bilden. In dem Getriebedeckel 2 ist eine Antriebswelle 3 um eine Drehachse X-X drehbar gelagert angeordnet. Die Antriebswelle 3 ist antriebsmäßig mit einer Drehmomentbegrenzungskupplung 4 verbunden. Hierzu ist die Antriebswelle 3 mit einem Außenteil 5 der Drehmomentbegrenzungskupplung 4 verschweißt. Die Drehmomentbegrenzungskupplung 4 weist ferner ein Innenteil 6 auf, welches einteilig in eine Anschlußwelle 7 übergeht. Die Anschlußwelle 7 ist innerhalb des Getriebegrundkörpers 1 um die Drehachse X-X drehbar angeordnet.
In dem Innenteil 6 sind Sperrkörper 8 radial verschiebbar angeordnet. Die Sperrkörper 8 greifen in Nuten 9 des Außenteils 5 ein und gewährleisten somit eine drehfeste Verbindung zwischen dem Innenteil 6 und dem Außenteil 5. Bei Überschreiten eines bestimmten Drehmomentes werden die Sperrkörper 8 gegen eine Federkraft aus den Nuten 9 gedrückt und in Richtung auf die Drehachse X-X radial verschoben, so daß das Außenteil 5 relativ zum Innenteil 6 gedreht werden kann. Die genaue Funktionsweise ergibt sich aus der Patentschrift DE 32 05 513 C1.

Der Gehäusedeckel 2 weist eine koaxiale zur Drehachse X-X angeordnete Bohrung 10 auf, durch die die Antriebswelle 3 aus dem Getriebegehäuse austritt. Die Antriebswelle 3 ist mittels eines ersten Kegelrollenlagers 11 und eines zweiten Kegelrollenlagers 12 wälzgelagert. Das erste Kegelrollenlager 11 und das zweite Kegelrollenlager 12 sind zueinander in sogenannte O-Anordnungen angeordnet. Die ersten Wälzkörper 13 des ersten Kegelrollenlagers 11 weisen Wirkungslinien 14 auf, die die Richtung der Kraftübertragung von einem ersten Innenring 15 auf einen ersten Außenring 16 des ersten Kegelrollenlagers 11 angeben. Die ersten Wirkungslinien 14 schneiden die Drehachse X-X in einem ersten Abstützpunkt 18, der vom zweiten Kegelrollenlager 12 abgewandt ist. Das zweite Kegelrollenlager 12 weist entsprechend dem ersten Kegelrollenlager 11 zweite Wälzkörper 19, einen zweiten Innenring 20 und einen zweiten Außenring 21 auf. Zweite Wirkungslinien 22 der zweiten Wälzkörper 19 schneiden die Drehachse X-X in einem zweiten Abstützpunkt 23, der vom ersten Kegelrollenlager 11 entfernt angeordnet ist. Somit ergibt sich ein Abstand zwischen dem ersten Abstützpunkt 18 und dem zweiten Abstützpunkt 23, der größer ist als der Abstand zwischen dem ersten Kegelrollenlager und dem zweiten Kegelrollenlager. Diese sogenannte O-Anordnung gewährleistet eine weite Abstützung, um die Länge auskragender Wellenbereiche zu verringern.

Der erste Innenring 15 des ersten Kegelrollenlagers 11 stützt sich gegen eine Schulter 24 der Antriebswelle in Richtung auf die Drehmomentbegrenzungskupplung 4 ab. Der erste Außenring 16 stützt sich gegen eine Schulter 25 des Getriebedeckels 2 in Richtung von der Drehmomentbegrenzungskupplung 4 weg ab. Der zweite Außenring 21 stützt sich gegen eine Schulter 26 im Getriebedeckel 2 in Richtung auf die Drehmomentbegrenzungskupplung 4 ab. Die Antriebswelle 3 weist ferner ein Gewinde 27 auf, auf das eine Wellenmutter 28 aufgeschraubt ist, die sich gegen den zweiten Innenring 20 abstützt, so daß mittels der Wellenmutter 28 die Lageranordnung, bestehend aus erstem Kegelrollenlager 11 und zweitem Kegelrollenlager 12, als Festlagerung vorgespannt werden kann.

Die Anschlußwelle 7 weist einen der Antriebswelle 3 zugewandten zylindrischen Zapfen 29 auf, der koaxial zur Drehachse X-X angeordnet ist. Der Zapfen 29 ist mittels eines Nadellagers 30 in einer zylindrischen Lagerbohrung 31 der ersten Antriebswelle 3 gelagert, wobei die Lagerbohrung 31 ebenfalls koaxial zur Drehachse X-X angeordnet ist. Das Nadellager 30 ist im Bereich des ersten Abstützpunktes 18 angeordnet. Radialkräfte, die vom Zapfen 29 über das Nadellager 30 auf die Antriebswelle 3 übertragen werden, können somit über das erste Kegelrollenlager 11 auf den Getriebedeckel 2 weitergeleitet werden.

Die Anschlußwelle 7 ist im Getriebegrundkörper 1 mittels eines Pendelrollenlagers 32 wälzgelagert. An dem dem Zapfen 29 entfernten Wellenende 33 der Anschlußwelle 7 weist diese eine Längsverzahnung 34 auf, auf die ein Zahnrad 35 einer Getriebestufe aufgeschoben ist.
Der Getriebegrundkörper 1 bildet einen ersten Innenraum 36, und der Getriebedeckel 2 bildet einen zweiten Innenraum 37. An dem ersten Kegelrollenlager 11 ist an der dem zweiten Kegelrollenlager 12 zugewandten Seite eine Abdeckscheibe 38 vorgesehen, die den zweiten Innenraum 37 gegenüber dem ersten Innenraum 36 abdichtet. Ferner ist in der Bohrung 10 des Getriebedeckels 2 ein axialer Wellendichtring 39 vorgesehen, der den zweiten Innenraum 37 nach außen hin abdichtet. Die Bohrung 10 ist in einem zylindrischen Deckelabschnitt 40 gebildet, der mit einer Wandung 41 in den ersten Innenraum 36 hineinragt. In der Wandung 41 ist eine Verbindungsbohrung 42 vorgesehen, die eine Verbindung für Schmieröl zwischen dem ersten Innenraum 36 und dem zweiten Innenraum 37 herstellt. Die Verbindungsbohrung 42 geht vom ersten Innenraum 36 aus und mündet in den zweiten Innenraum 37 im Bereich zwischen dem ersten Kegelrollenlager 11 und dem zweiten Kegelrollenlager 12.

Kegelrollenlager weisen einen Kreiselpumpeneffekt auf, durch den Schmieröl in axialer Richtung auf den Abstützpunkt zu gepumpt wird. Das zweite Kegelrollenlager 12 pumpt daher bei einer Drehbewegung der Antriebswelle 3 Schmieröl von seiner der Drehmomentbegrenzungskupplung 4 zugewandten Seite zu der der Drehmomentbegrenzungskupplung 4 abgewandten Seite. Durch die Abdeckscheibe 38 wird vermieden, daß Schmieröl vom ersten Kegelrollenlager 11 zurück in den ersten Innenraum 36 gepumpt wird. Im Bereich zwischen dem zweiten Kegelrollenlager 12 und dem Wellendichtring 39 weist die Antriebswelle 3 eine Radialbohrung 43 auf, die ausgehend von einer Außenumfangsfläche 44 der Antriebswelle 3 in einer Axialbohrung 45 mündet. Die Axialbohrung 45 mündet ihrerseits in eine Grundfläche 46 der zylindrischen Lagerbohrung 31. Das Öl kann somit vom zweiten Innenraum 37 durch die Radialbohrung 43 und durch die Axialbohrung 45 in die Lagerbohrung 31 eindringen und sorgt dort für eine Schmierung des Nadellagers 30. Nach der Schmierung des Nadellagers 30 fließt das Schmieröl zurück in den ersten Innenraum 36.

Der Gehäusedeckel 2 ist mittels Schrauben 17 mit dem Gehäusegrundkörper 1 lösbar verbunden. An die Drehmomentbegrenzungskupplung 4 zu gelangen, läßt sich daher der Gehäusedeckel 2 vom Getriebegrundkörper 1 entfernen. Da die Antriebswelle 3 über die Kegelrollenlager 11, 12 fest mit dem Gehäusedeckel 2 verbunden ist, wird beim Entfernen des Gehäusedeckels 2 die Antriebswelle 3 vom Zapfen 29 der Anschlußwelle 7 entfernt. Ferner ist das Außenteil 5 der Drehmomentbegrenzungskupplung 4 derart ausgestaltet, daß dieses vom Innenteil 6 gezogen werden kann. Es ist somit eine Zugänglichkeit zur Drehmomentbegrenzungskupplung 4 gewährleistet, ohne das Getriebe vollständig demontieren zu müssen.

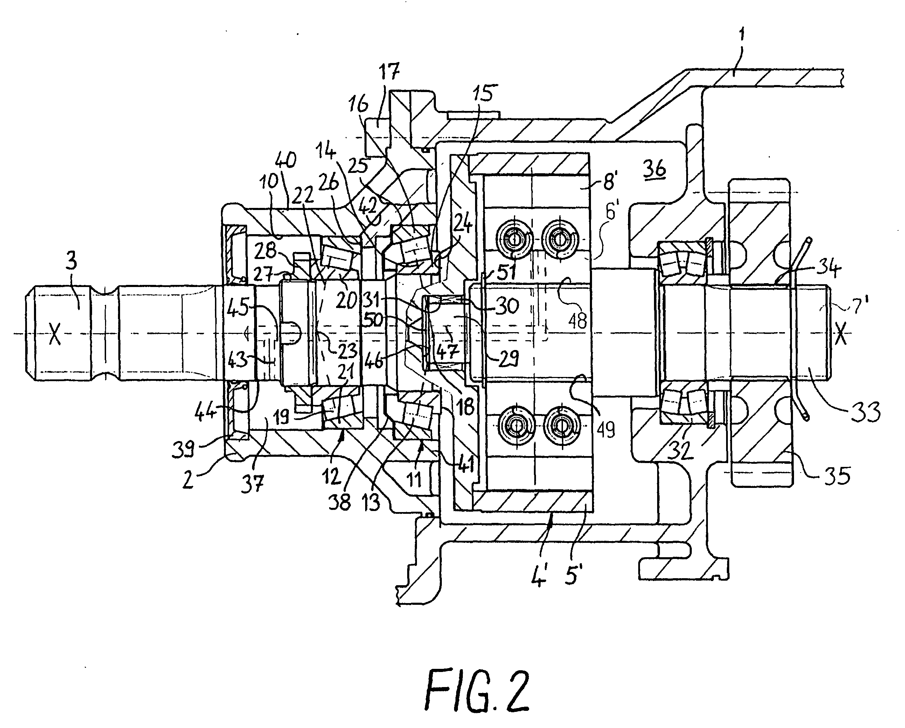

Figur 2 zeigt ein Zahnradgetriebe gemäß Figur 1 , jedoch mit einer anderen Überlastkupplung. Bauteile, die mit Bauteilen des Getriebes gemäß Figur 1 übereinstimmen, sind mit gleichen Bezugsziffern versehen und bei Figur 1 beschrieben.

Es ist eine Drehmomentbegrenzungskupplung 4' vorgesehen, die ein Innenteil 6' aufweist, welches eine Durchgangsbohrung 49 mit einer Keilverzahnung aufweist. Das Innenteil 6' ist auf die separat ausgeführte Anschlusswelle 7' aufgesteckt und mit einem Sicherungsring 51 axial gesichert. In dem Innenteil 6' sind Sperrkörper 8' radial verschiebbar angeordnet, wobei diese zum Übertragen von Drehmomenten in Nuten des Außenteils 5' eingreifen. Die Funktionsweise ergibt sich aus der Patentschrift DE 41 37 829 C2.

### Bezugszeichenliste

- 1: Getriebegrundkörper
- 2: Getriebedeckel
- 3: Antriebswelle
- 4, 4': Drehmomentbegrenzungskupplung
- 5, 5': Außenteil
- 6, 6': Innenteil
- 7, 7': Anschlusswelle
- 8, 8': Mitnehmerkörper
- 9: Nut
- 10: Bohrung
- 11: erstes Kegelrollenlager
- 12: zweites Kegelrollenlager
- 13: erster Wälzkörper
- 14: erste Wirkungslinie
- 15: erster Innenring
- 16: erster Außenring
- 17: Schraube
- 18: erster Abstützpunkt
- 19: zweiter Wälzkörper
- 20: zweiter Innenring
- 21: zweiter Außenring
- 22: zweite Wirkungslinie
- 23: zweiter Abstützpunkt
- 24: Schulter
- 25: Schulter
- 26: Schulter
- 27: Gewinde
- 28: Wellenmutter
- 29: Zapfen
- 30: Nadellager
- 31: Lagerbohrung
- 32: Pendelrollenlager
- 33: Wellenende
- 34: Längsverzahnung
- 35: Zahnrad
- 36: erster Innenraum
- 37: zweiter Innenraum
- 38: Abdeckscheibe
- 39: Axialwellendichtring
- 40: zylindrischer Deckelabschnitt
- 41: Wandung
- 42: Verbindungsbohrung
- 43: Radialbohrung
- 44: Außenumfangsfläche
- 45: Axialbohrung
- 46: Grundfläche
- 47: Axialbohrung
- 48: Keilverzahmung
- 49: Durchgangsbohrung
- 50: Stirnfläche
- 51: Sicherungsring

## Patentansprüche

1. Zahnradgetriebe
- mit einem Getriebegehäuse (1, 2),
- mit einer Antriebswelle (3),
- die durch eine Bohrung (10) aus dem Getriebegehäuse (1, 2) austritt, und
- die im Getriebegehäuse (1, 2) um eine Drehachse (X-X) drehbar gelagert ist,
- mit einer Anschlußwelle (7, 7'),
- die innerhalb des Getriebegehäuses (1, 2) angeordnet ist,
- die um die Drehachse (X-X) drehbar gelagert ist und
- die mit einem Zahnrad (35) einer Getriebestufe drehfest verbunden ist,
- mit einer Drehmomentbegrenzungskupplung (4, 4'), die innerhalb des Getriebegehäuses (1, 2) angeordnet ist und die antriebsseitig mit einem Wellenende der Antriebswelle (3) und abtriebsseitig mit einem Wellenende der Anschlußwelle (7, 7') verbunden ist,
wobei die Antriebswelle (3) und die Anschlußwelle (7, 7') axial hintereinander angeordnet sind und an ihrem Wellenende mittels eines Radiallagers (30) gegeneinander gelagert sind.

2. Zahnradgetriebe nach Anspruch 1,
**dadurch gekennzeichnet,**
**daß** die Anschlußwelle (7, 7') einen Zapfen (29) aufweist, der in einer axial verlaufenden Lagerbohrung (31) der Antriebswelle (3) gelagert ist.

3. Zahnradgetriebe nach Anspruch 2,
**dadurch gekennzeichnet,**
**daß** das Radiallager durch ein Nadellager (30) gebildet ist.

4. Zahnradgetriebe nach einem der Ansprüche 1 bis 3,
**dadurch gekennzeichnet,**
**daß** die Antriebswelle (3) mittels zweier Kegelrollenlager (11, 12) im Getriebegehäuse (1, 2) gelagert ist, wobei sich die Wirkungslinien (14, 22) der Abstützung der Wälzkörper (13, 19) jeweils eines Kegelrollenlagers (11, 12) in einem Abstützpunkt (18, 23) schneiden und die beiden Kegelrollenlager (11, 12) zwischen den Abstützpunkten (18, 23) angeordnet sind (O-Anordnung).

5. Zahnradgetriebe nach Anspruch 4,
**dadurch gekennzeichnet,**
**daß** das Radiallager (30) im Bereich der Wirkungslinien (14) desjenigen Kegelrollenlagers (11) der Antriebswelle (3) angeordnet ist, das am nächsten zur Drehmomentbegrenzungskupplung (4, 4') angeordnet ist.

6. Zahnradgetriebe nach einem der Ansprüche 1 bis 5,
**dadurch gekennzeichnet,**
**daß** das Getriebegehäuse einen Gehäusegrundkörper (1), der einen ersten Innenraum (36) bildet, und einen Gehäusedeckel (2), der lösbar mit dem Gehäusegrundkörper (1) verbunden ist und einen zweiten Innenraum (37) bildet, umfaßt,
**daß** die Bohrung (10), durch die die Antriebswelle (3) aus dem Getriebegehäuse (1, 2) austritt, in dem Gehäusedeckel (2) vorgesehen ist und
**daß** die Antriebswelle (3) in der Bohrung (10) im Gehäusedeckel (2) gelagert ist.

7. Zahnradgetriebe nach Anspruch 6,
**dadurch gekennzeichnet,**
**daß** zwischen den beiden Kegelrollenlagern (11, 12) eine Dichtung (38) angeordnet ist, durch die der zweite Innenraum (37) gegenüber dem ersten Innenraum (36) abgedichtet ist, und
**daß** auf derjenigen Seite der Antriebswelle (3), die der Drehmomentbegrenzungskupplung abgewandt ist, ein Wellendichtring (39) vorgesehen ist, mittels dem der zweite Innenraum (37) nach außen hin abgedichtet ist.

8. Zahnradgetriebe nach Anspruch 6,
**dadurch gekennzeichnet,**
**daß** eine Verbindungsbohrung (42) vorgesehen ist,
- die den ersten Innenraum (36) und den zweiten Innenraum (37) miteinander verbindet, wobei die Verbindungsbohrung (42) in einer Wand (41) des Gehäusedeckels (2) vorgesehen ist,
- die vom ersten Innenraum (36) ausgeht und
- die in einem Bereich zwischen den beiden Kegelrollenlagern (11, 12) in den zweiten Innenraum (37) mündet,
**daß** die Antriebswelle (3) zwischen dem Wellendichtring (39) und demjenigen Kegelrollenlager (12), das am nächsten zum Wellendichtring (39) angeordnet ist, ausgehend von einer Außenumfangsfläche (44) der Antriebswelle (3) eine Radialbohrung (43) aufweist, und
**daß** die Radialbohrung (43) in eine Axialbohrung (45) übergeht, die in eine Grundfläche (46) der Lagerbohrung (31) der Antriebswelle (3) mündet.

9. Zahnradgetriebe nach einem der Ansprüche 1 bis 8,
**dadurch gekennzeichnet,**
**daß** die Drehmomentbegrenzungskupplung (4, 4') durch eine Sperrkörperkupplung dargestellt ist.

10. Zahnradgetriebe nach Anspruch 9,
**dadurch gekennzeichnet,**
**daß** die Sperrkörperkupplung ein Außenteil (5) und ein Innenteil (6) umfaßt, wobei das Außenteil (5) eine Baueinheit mit der Antriebswelle (3) und das Innenteil (6) eine Baueinheit mit der Anschlußwelle (7) bildet.

11. Zahnradgetriebe nach Anspruch 11,
**dadurch gekennzeichnet,**
**daß** das Außenteil (5) mit der Antriebswelle (3) verschweißt ist.

12. Zahnradgetriebe nach Anspruch 10 oder 11,
**dadurch gekennzeichnet,**
**daß** das Innenteil (6) einteilig mit der Anschlußwelle (7) ausgebildet ist.

13. Zahnradgetriebe nach Anspruch 10 oder 11,
**dadurch gekennzeichnet,**
**daß** die Anschlußwelle (7') eine Keilverzahnung (48) aufweist und
**dass** das Innenteil (6') eine axiale Durchgangsbohrung (49) mit einer komplementären Keilverzahnung aufweist, mit der das Innenteil (6') auf die Keilverzahnung (48) der Anschlusswelle (7') aufgesteckt ist.

14. Zahnradgetriebe nach einem der Ansprüche 9 bis 13,
**dadurch gekennzeichnet,**
**dass** die Anschlusswelle (7, 7') ausgehend von einer Stirnfläche (50) eine Bohrung (47) aufweist, die zur Schmierung zu den Sperrkörpern (8, 8') führt.

15. Zahnradgetriebe nach einem der Ansprüche 1 bis 14,
**dadurch gekennzeichnet,**
**daß** die Anschlußwelle (7, 7') mittels eines Wälzlagers (32) im Getriebegehäuse (1, 2) gelagert ist.

16. Zahnradgetriebe nach Anspruch 15,
**dadurch gekennzeichnet,**
**daß** das Wälzlager (32) durch ein Pendelrollenlager (32) gebildet ist.

## Claims

1. A gear transmission
having a transmission housing (1, 2);
having a driveshaft (3)
- which projects out of the transmission housing (1, 2) through a bore (10) and
- which, in the transmission housing (1, 2), is rotatably supported around an axis of rotation (X-X);
- having a connection shaft (7, 7') which is arranged inside the transmission housing (1, 2), which is rotatably supported around the axis of rotation (X-X) and which is connected in a rotationally fast way to a gearwheel (35) of a transmission stage;
having a torque limiting coupling (4, 4') which is arranged inside the transmission housing (1, 2) and which, at the input end, is connected to a shaft end of the driveshaft (3) and, at the output end, to a shaft end of the connection shaft (7, 7'),
wherein the driveshaft (3) and the connection shaft
(7, 7') are arranged axially one behind the other and, at their shaft ends, are supported relative to one another by means of a radial bearing (3).

2. A gear transmission according to claim 1,
**characterised in**
**that** the connection shaft (7, 7') comprises a journal (29) which is supported in an axially extending bearing bore (31) of the driveshaft (3).

3. A gear transmission according to claim 2,
**characterised in**
**that** the radial bearing is formed by a needle bearing (30).

4. A gear transmission according to any one of claims 1 to 3,
**characterised in**
**that** the driveshaft (3) is supported by two tapered roller bearings (11, 12) in the transmission housing (1, 2), wherein the lines of action (14, 22) of the support of the rolling members (13, 19) of each tapered roller bearing (11, 12) intersect one another in a supporting point (18, 23) and wherein the two tapered roller bearings (11, 12) are arranged between the supporting points (18, 23) (O-arrangement).

5. A gear transmission according to claim 4,
**characterised in**
**that** the radial bearing (30) is arranged within the range of the lines of action (14) of that particular tapered roller bearing (11) of the driveshaft (3) which is arranged nearest to the torque limiting coupling (4, 4').

6. A gear transmission according to any one of claims 1 to 5,
**characterised in**
**that** the transmission housing comprises a basic housing member (1) forming a first interior (36) and a housing cover (2) releasably connected to the basic housing member (1) and comprising a second interior (37);
**that** the bore (10) through which the driveshaft (3) projects out of the transmission housing (1, 2) is provided in the housing cover (2); and
**that** the driveshaft (3) is supported in the bore (10) of the housing cover (2).

7. A gear transmission according to claim 6,
**characterised in**
**that** between the two tapered roller bearings (11, 12) there is arranged a seal (38) which seals the second interior (37) relative to the first interior (36); and
**that** on the side of the driveshaft (3) which faces away from the torque limiting coupling, there is provided a shaft sealing ring (39) by means of which the second interior (37) is sealed towards the outside.

8. A gear transmission according to claim 6,
**characterised in**
**that** there is provided a connecting bore (42)
- which connects the first interior (36) and the second interior (37) to one another, which connecting bore (42) is provided in a wall (41) of the housing cover (2),
- which starts from the first interior (36) and
- which, in a region between the two tapered roller bearings (11, 12), ends in the second interior (37);
**that** the driveshaft (3) is arranged between the shaft sealing ring (39) and the tapered roller bearing (12) which is arranged closest to the shaft sealing ring (39), and, starting from an outer circumferential face (44) of the driveshaft (3), comprises a radial bore (43), and
**that** the radial bore (43) changes into an axial bore (45) which ends in a base face (46) of the baring bore (31) of the driveshaft (3).

9. A gear transmission according to any one of claims 1 to 8,
**characterised in**
**that** the torque limiting coupling (4, 4') is provided in the form of a locking member coupling.

10. A gear transmission according to claim 9,
**characterised in**
**that** the locking member coupling comprises an outer part (5) and an inner part (6), wherein the outer part (5) forms one unit with the driveshaft (3) and wherein the inner part (6) forms one unit with the connection shaft (7).

11. A gear transmission according to claim 10,
**characterised in**
**that** the outer part (5) is welded to the driveshaft (3).

12. A gear transmission according to claim 10 or 11,
**characterised in**
**that** the inner part (6) is formed so as to be integral with the connection shaft (7).

13. A gear transmission according to claim 10 or 11,
**characterised in**
**that** the connection shaft (7') comprises splines (48) and
**that** the inner part (6') comprises an axial through-bore (49) with complementary splines by means of which the inner part (6') is slipped on to the splines (48) of the connection shaft (7').

14. A gear transmission according to any one of claims 9 to 13,
**characterised in**
**that** the connection shaft (7, 7') comprises a bore (47) which starts from an end face (50) and which, for lubricating purposes, leads to the locking members (8, 8').

15. A gear transmission according to any one of claims 1 to 14,
**characterised in**
**that** the connection shaft (7, 7') is supported by a rolling bearing (32) in the transmission housing (1, 2).

16. A gear transmission according to claim 15,
**characterised in**
**that** the rolling bearing (32) is formed by a self-aligning roller bearing (32).

## Revendications

1. Transmission à engrenage
- avec un carter de transmission (1, 2),
- avec un arbre d'entraînement (3),
- qui sort par un alésage (10) du carter de transmission (1, 2), et
- qui est logé dans le carter de transmission (1, 2) de façon pivotante autour d'un axe de rotation (X-X),
- avec un arbre de raccordement (7, 7'),
- qui est disposé à l'intérieur du carter de transmission (1, 2),
- qui est logé de façon pivotante autour de l'axe de rotation (X-X) et
- qui est relié de façon solidaire en rotation à une roue d'engrenage (35) d'un étage de transmission,
- avec un accouplement de limitation de couple (4, 4'), qui est disposé à l'intérieur de la transmission à engrenage (1, 2) et qui est relié côté entraînement à une extrémité de l'arbre d'entraînement (3) et côté sortie à une extrémité de l'arbre de raccordement (7, 7'),
l'arbre d'entraînement (3) et l'arbre de raccordement (7, 7') étant disposés axialement l'un derrière l'autre et étant logés l'un contre l'autre sur leur extrémité d'arbre au moyen d'un palier radial (30).

2. Transmission à engrenage selon la revendication 1, **caractérisée en ce que**, l'arbre de raccordement (7, 7') présente un pivot (29) qui est logé dans un alésage de palier (31) agencé axialement de l'arbre d'entraînement (3).

3. Transmission à engrenage selon la revendication 2, **caractérisée en ce que**, le palier radial est formé par un palier à aiguille (30).

4. Transmission à engrenage selon l'une quelconque des revendications 1 à 3, **caractérisée en ce que** l'arbre d'entraînement (3) est logé au moyen de deux roulements à rouleaux coniques (11, 12) dans la transmission à engrenage (1, 2), les lignes d'action (14, 22) du soutien des corps de roulement (13, 19) de respectivement un roulement à rouleaux coniques (11, 12) se coupent en un point d'appui (18, 23) et les deux roulements à rouleaux coniques (11, 12) étant disposés entre les points d'appui (18, 23) (agencement en O).

5. Transmission à engrenage selon la revendication 4, **caractérisée en ce que** le palier radial (30) est disposé dans la zone des lignes d'action (14) du roulement à rouleaux coniques (11) de l'arbre d'entraînement (3) qui est disposé le plus près de l'accouplement de limitation de couple (4, 4').

6. Transmission à engrenage selon l'une quelconque des revendications 1 à 5, **caractérisée en ce que**, le carter de transmission comprend un corps de base de carter (1), qui forme un premier espace intérieur (36), et un couvercle de carter (2), qui est relié de façon amovible au corps de base de carter (1) et forme un second espace intérieur (37), **en ce que** l'alésage (10), par lequel l'arbre d'entraînement (3) sort du carter de transmission (1, 2), est prévu dans le couvercle de carter et **en ce que** l'arbre d'entraînement (3) est logé dans l'alésage (10) dans le couvercle de carter (2).

7. Transmission à engrenage selon la revendication 6, **caractérisée en ce que** entre les deux roulements à rouleaux coniques (11, 12) est disposé un joint (38), par lequel le second espace intérieur (37) est rendu étanche par rapport au premier espace intérieur (36), et **en ce que** sur le côté de l'arbre d'entraînement (3) qui est opposé à l'accouplement de limitation de couple, est prévue une bague d'étanchéité d'arbre (39), au moyen de laquelle le second espace intérieur (37) est rendu étanche en direction de l'extérieur.

8. Transmission à engrenage selon la revendication 6, **caractérisée en ce que** il est prévu un alésage de liaison (42),
- qui relie le premier espace intérieur (36) et le second espace intérieur (37) entre eux, l'alésage de liaison (42) étant prévu dans une paroi (41) du couvercle de carter (2),
- qui part du premier espace intérieur (36) et
- qui débouche dans une zone entre les deux roulements à rouleaux coniques (11, 12) dans le second espace intérieur (37),
**en ce que** l'arbre d'entraînement (3) présente un alésage radial (43) entre la bague d'étanchéité d'arbre (39) et le roulement à rouleaux coniques (12) qui est disposé le plus près de la bague d'étanchéité d'arbre (39), à partir d'une surface périphérique extérieure (44) de l'arbre d'entraînement (3), et **en ce que** l'alésage radial (43) fait place à un alésage axial (45) qui débouche dans une surface de base (46) de l'alésage de palier (31) de l'arbre d'entraînement (3) .

9. Transmission à engrenage selon l'une quelconque des revendications 1 à 8, **caractérisée en ce que** l'accouplement de limitation de couple (4, 4') est représenté par un accouplement de corps de blocage.

10. Transmission à engrenage selon la revendication 9, **caractérisée en ce que** l'accouplement de corps de blocage comprend une partie extérieure (5) et une partie intérieure (6), la partie extérieure (5) formant un module avec l'arbre d'entraînement (3) et la partie intérieure (6) un module avec l'arbre de raccordement (7).

11. Transmission à engrenage selon la revendication 11, **caractérisée en ce que** la partie extérieure (5) est soudée avec l'arbre d'entraînement (3).

12. Transmission à engrenage selon la revendication 10 ou 11, **caractérisée en ce que** la partie intérieure (6) est conçue d'une seule pièce avec l'arbre de raccordement (7).

13. Transmission à engrenage selon la revendication 10 ou 11, **caractérisée en ce que** l'arbre de raccordement (7') présente une denture à clavette (48) et **en ce que** la partie intérieure (6') présente un alésage de passage (49) axial avec une denture à clavette complémentaire, avec laquelle la partie intérieure (6') est emboîtée sur la denture à clavette (48) de l'arbre de raccordement (7').

14. Transmission à engrenage selon l'une quelconque des revendications 9 à 13, **caractérisée en ce que** l'arbre de raccordement (7, 7') présente à partir d'une surface frontale (50) un alésage (47) qui entraîne la lubrification pour les corps de blocage (8, 8').

15. Transmission à engrenage selon l'une quelconque des revendications 1 à 14, **caractérisée en ce que** l'arbre de raccordement (7, 7') est logé au moyen d'un palier de roulement (32) dans le carter de transmission (1, 2).

16. Transmission à engrenage selon la revendication 15, **caractérisée en ce que** le palier de roulement (32) est formé par un roulement à rouleaux sur rotule (32).
